Europäisches Patentamt

European Patent Office

Office européen des brevets

(11) Publication number : **0 503 964 A1**

# (12) EUROPEAN PATENT APPLICATION

(21) Application number : **92302186.9**

(22) Date of filing : **13.03.92**

(51) Int. Cl.⁵ : **F01D 5/02**

(30) Priority : **14.03.91 US 669153**

(43) Date of publication of application :
**16.09.92 Bulletin 92/38**

(84) Designated Contracting States :
**DE FR GB IT**

(71) Applicant : **GENERAL ELECTRIC COMPANY**
**1 River Road**
**Schenectady, NY 12345 (US)**

(72) Inventor : **Bulman, David Edward**
**272 Parkway Avenue**
**Cincinnati, Ohio 45216 (US)**
Inventor : **Pan, Paul Yin-Pu**
**The Holiday Inn Lido, Apartment 6074**
**Beijing (CN)**

(74) Representative : **Pratt, Richard Wilson et al**
**London Patent Operation G.E. Technical**
**Services Co. Inc. Essex House 12/13 Essex**
**Street**
**London WC2R 3AA (GB)**

(54) Tooth geometry for fan shaft spline coupling.

(57)    There is provided by the present invention a fan shaft coupling for a gas turbine engine having an increased loading capacity and a tooth geometry therefor. The tooth geometry comprises a tooth profile including an involute form having a thirty degree pressure angle [B] and a compound curvature root fillet.

Fig 3

The present invention relates generally to a new and improved tooth geometry for a spline shaft coupling and in particular to a tooth geometry for the spline coupling of an aircraft gas turbine engine fan shaft.

## BACKGROUND OF THE PRESENT INVENTION

Modern aircraft gas turbine engines are complex machines operating at the extremes of the capabilities of the materials out of which they are built. Thus, the engine parts must be able to withstand stresses and strains introduced by vibrations, dimensional changes caused by temperature changes, and force transmissions throughout the engine. Traditionally, manufacturing engine parts capable of tolerating these stresses and strains has often meant adding material to the part, thereby making it bigger and adding weight.

With an aircraft gas turbine engine, extra weight introduces cost penalties in several fashions. First, adding weight to an engine directly increases an engine's cost simply because of the increased amount of material that must be used. Second, adding weight to the engine in one part often means that additional weight must be added some place else in the engine. Thus, adding a pound to an engine in one location may result in the addition of other pounds of material in other locations, which further increases the cost of the engine. Third, heavier parts most often mean that the part is dimensionally larger, which may result in other engine parts being made larger for the sole reason of the first part's size change. This again results in an increase in the material cost of the engine. Fourth, each pound of weight that appears in the engine results in a pound less cargo, whether material or passenger, that the aircraft can carry. Consequently, additional weight in the engine results in revenue losses for the airline, which reduces the value of the engine initially to the airline and the amount they are willing to pay to the engine manufacturer for the engine. Fifth, adding weight results in a reduced fuel efficiency and thereby makes the engine more expensive to operate, which again affects the amount the airline is willing to pay for an engine.

In sum, part size and weight have a great impact on overall engine cost and value. Thus, by making an engine part smaller and consequently less weighty, the engine may be downsized in other locations, thereby resulting in a great overall weight reduction. This downsizing in turn leads to reduced material costs and perhaps reduced manufacturing costs. Additionally, a lighter engine leads to increased revenues to the airlines due to the capability of carrying greater cargo loads and increased fuel efficiency. A lighter engine, therefore, is of greater value to the engine manufacturer due to lower costs and greater pricing.

One engine part where size and weight has an impact on other engine parts is the drive shaft of the engine, which extends between the fan at the front of the engine and the turbine section located at the rear of the engine. The drive shaft is centrally located along the engine axis and must be capable of transmitting thousands of foot-pounds of torque from the turbine section to the fan. On some new proposed engines, it is proposed that the per engine fan torque could exceed 200,000 foot-pounds.

The fan shaft has a splined coupling at the forward end to allow it to be assembled through the engine core. This splined coupling must have a sufficient diameter and strength to carry the fan torque. Thus, the spline shaft coupling capacity requires a shaft of a preselected minimum diameter, which in turn sizes the diameter of the engine core shaft, the core rotor disk bores, the bearings and other engine parts.

In the past, the transmission of such torques would indicate that a large diameter structure would be needed to transmit the torque generated within the engine to the fan. A spline coupling with a higher torque transmission capacity for a specified size would allow a smaller diameter spline to be utilized in the engine and would require a smaller core passage for the shafting. As a result, the weight of the engine would be reduced and the expected life of the bearings would increase.

Thus it would be desirable to have a new drive shaft to connect the fan section and turbine section of a gas turbine engine that is capable of transmitting the loads of the engine and that weighs less and uses less material than present designs of such drive shafts would.

## OBJECTS OF THE PRESENT INVENTION

It is an object of the present invention to provide new and improved apparatus that is not subject to the foregoing disadvantages.

It another object of the present invention to provide a new tooth geometry for spline couplings.

It is yet another object of the present invention to provide a new fan shaft spline coupling for a gas turbine engine that is smaller, weighs less, and is capable of transmitting the torque loads experienced by a gas turbine engine from the turbine section of the engine to the fan section of the engine.

It is still another object of the present invention to provide a gas turbine engine having a fan shaft spline coupling having a reduced weight and size over that of prior art couplings that results in an overall reduction in the size, weight and cost of the engine.

## SUMMARY OF THE PRESENT INVENTION

There is provided by the present invention a new and improved tooth geometry for use on a spline shaft coupling. The tooth has a reduced tooth height having a thirty degree pressure angle involute form and a compound curvature root fillet. The compound root fillet includes a bottom radius of curvature $r_1$ and a relatively smaller corner radius of curvature $r_2$ extending between the bottom radius and the involute profile of the tooth. In a preferred embodiment $r_1$ lies generally in the range of 1.1 to 1.6 divided by the diametral pitch and $r_2$ lies generally in the range of 0.4 to 0.6 divided by the diametral pitch. The addendum of,such a tooth should be preferably within a range of about .31 to .35 divided by the diametral pitch while the dedendum should be in the range of about .63 to .65 divided by the diametral pitch. This produces a clearance in the range of about .22 divided by the diametral pitch and a whole depth within a range of about 1.16 to 1.22 divided by the diametral pitch.

The foregoing objects of the invention will become apparent to those skilled in the art when the following detailed description of the invention is read in conjunction with the accompanying drawings and claims. Throughout the drawings, like numerals refer to similar or identical parts.

## BRIEF DESCRIPTION OF THE DRAWINGS

Figure 1 shows in a side elevation cross sectional view a schematic representation of a gas turbine engine of a type in which the present invention may find application.

Figure 2 illustrates in a cross sectional view a fan spline shaft coupling of a type in which the present invention may find application.

Figure 3 shows a view taken along cutting plane 33 of Figure 2 and illustrates a spline shaft coupling tooth geometry in accord with the present invention.

## DETAILED DESCRIPTION OF THE INVENTION

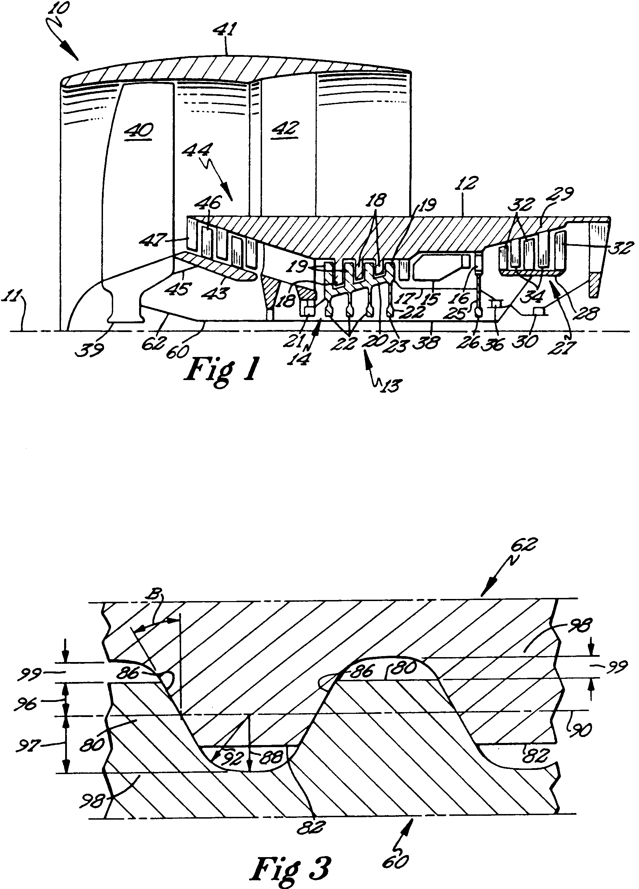

Referring now to the drawings, and particularly to Figure 1, there is illustrated in a highly schematic, partial cross sectional view a gas turbine engine, generally designated 10, of the type on which the present invention may find application. The engine 10 has a longitudinal center line 11 and an annular casing 12 disposed coaxially and concentrically about the centerline 11. The engine 10 includes a core gas generator engine 13 which is composed of a high pressure compressor 14, a combustor 15, and a high pressure turbine 16, either single or multiple stage, all arranged coaxially about the longitudinal centerline 11 of the engine in a serial, axial flow relationship. An annular drive shaft 17 fixedly interconnects the compressor 14 and high pressure turbine 16.

Compressor 16 includes a plurality of stator vanes 18 interdigitated with a plurality of rotor blades 19 rotatably supported by a compressor rotor means 20. Compressor rotor means 20 is rotatably mounted by a high pressure rotor bearing 21. Compressor means 20 may include a rotor disk 22 supporting a row of blades 19. Each rotor disk 22 has a bore 23 through which a fan drive shaft 38 passes. Similarly, high pressure turbine 16 may include one or more rows of rotor blades 24 each row being supported by a disk 25, and each disk 25 including a bore 26 through which fan drive shaft 38 passes. As can be seen here, the diameter of shaft 38 affects the size of bores 23 and 26 and high pressure compressor rotor bearing 21. By decreasing the diameter of fan drive shaft 38, the diameter of disk bores 23 and 26 can be made smaller, for example, and the overall weight of the disks decreased as a result thereof.

The core engine 13 is effective for generating combustion gases. Pressurized air from the compressor 14 is mixed with fuel in the combustor 15 and ignited, thereby generating combustion gases. Some work is extracted from these gases by the high pressure turbine 16 that drives the compressor 14. The remainder of the combustion gases are discharged from the core engine 13 into a low pressure power turbine 27.

The low pressure power turbine 27 includes an annular drum rotor 28 and a stator 29. The rotor 28 is rotatably mounted by suitable bearings 30 and includes a plurality of turbine blade rows 32 extending radially outwardly therefrom and axially spaced. The stator 29 is disposed radially outwardly from the rotor 28 and has a plurality of stator vane rows 34 fixedly attached to and extending radially inwardly from the stationary casing 12. The stator vane rows 34 are axially spaced so as to alternate with the turbine blade rows 32. The rotor 28 is interconnected to drive shaft 17 via differential bearings 36 and fixedly attached to fan drive shaft 38. The drive shaft 38, in turn, rotatably drives a forward fan disk 39. Disk 39 has a row of fan blades 40 attached thereto in known manner that is driven by fan drive shaft 38 to produce bypass thrust. Fan blades 40 are housed within a nacelle 41 supported about the stationary casing 12 by a plurality of struts 42, only one of which is shown. A forward booster rotor 43 that forms part of a booster compressor 44 is driven by an attachment 45 to fan disk 39. The booster compressor 44 is comprised of a plurality of booster blade rows 46 fixedly attached to and extending radially outwardly from the booster rotor 43 for rotation therewith and a plurality of booster stator vane rows 47 fixedly attached to and extending radially inwardly from the stationary casing 12. Both the booster blade rows 46 and the stator vane rows 47 are axially spaced and so arranged as to alternate with one another.

As shown in Figure 1, fan drive shaft 38 functions to connect low pressure turbine 27 with fan blade row 40 and to transmit the torque generated in low pressure turbine 27 to the fan to produce bypass thrust to propel the engine and attached aircraft. Because fan drive shaft 38 is centrally located in the engine core, its diameter has an impact on the other engine part sizes. As previously noted, by reducing the diameter of the fan drive shaft 38, the weight of the drive shaft itself will decrease and other engine parts may be similarly affected.

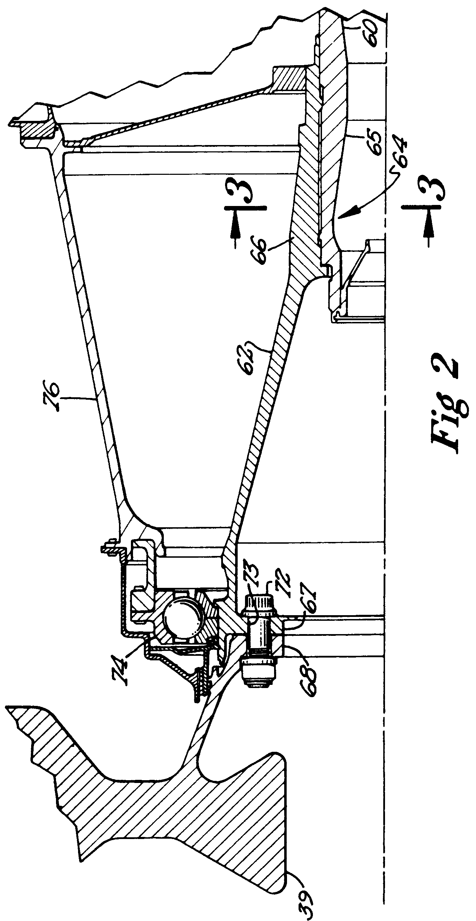

A representative fan shaft spline coupling is shown in cross-section in Figure 2. Drive shaft 38 includes a low pressure turbine shaft 60 attached to a forward fan shaft 62 at a splined coupling 64, which comprises inner and outer splines 65 and 66, respectively. Shaft 62 includes a flange 67 that abuts a flange 68, which is part of a depending member 70 that is integral with fan disk 39. A plurality of bolts 72 extend individually through an equal number of bolt holes 73 and are used to attach flanges 67 and 68 to each other. Forward fan shaft 62 rotatably mounts a bearing assembly 74. A housing 76 encloses the forward fan shaft and fan shaft spline coupling.

The capability of a splined coupling is largely determined by two stress components in the spline tooth. The first of these is the bending stress produced by the tangential load bending the tooth like a beam. This stress maximum at the root of the tooth, where the bending moment is greatest and the root corner fillet creates a stress concentration. The second important component of stress is the torsional shear stress in the shaft. This stress is maximum at the bottom of the root fillet due to the stress concentration caused by the tooth shape on the surface of the shaft. The combination of these stress components limits the capacity of the splined connection.

An improved tooth geometry for fan shaft spline coupling 64, which is shown in Figure 2, is depicted in Figure 3. The tooth geometry depicted provides an increased capacity by providing a high bending strength while minimizing the torsional shear stress in the shaft. The spline coupling of the present invention comprises inner and outer splines 65 and 66 attached to low pressure turbine drive shaft 60 and forward fan shaft 62 respectively. Inner spline 65 includes a plurality of spline teeth 80 that are intermeshed with a plurality of outer spline teeth 82 forming part of outer spline 66. Tooth 80 has a pressure angle $\beta$ equal to 30 degrees and a tooth profile 86 having an involute form. The tooth includes a compound root geometry having a bottom radius $R_b$ indicated by reference numeral 88 such that $R_b$ lies in the range of about 1.1/p to about 1.6/p where p is the diametral pitch. As is well known, the diametral pitch is equal to the number of teeth divided by the diameter of the pitch line of the tooth, indicated here by reference numeral 90. A corner radius $R_c$ indicated by reference numeral 92 extends between the bottom radius $R_b$ 88 and the involute tooth profile 86. Preferably, $R_c$ lies in the range of about .4/p to about .6/p. The tooth has a relatively small whole depth. The addendum A of the tooth, here indicated by reference numeral 96, is that portion of the tooth extending between the pitch line 90 and the tip thereof. Preferably, A lies in the range of about .31/p to, about .35/p. The dedendum D, here indicated by reference numeral 97, is that portion of the tooth lying between the root 98 and the pitch line 90. Preferably, D lies in the range of about .63/p to about .65/p. The clearance 99 is therefore about .22/p.

The tooth geometry depicted improves the spline capacity of coupling 63 by minimizing both the bending and torsion stresses in the tooth. The root geometry consisting of the corner radius of .4/p to .6/p and the bottom radius of 1.1/p to 1.6/p, minimizes both the bending stress concentration in the corner area of the root and the torsional stress concentration at the bottom of the root. Two different radii also separate the locations of peak bending stress and peak torsional stress. Therefore, the peak combined stress is lower than a combination of the peak bending and torsional stresses. The relatively short tooth height (whole depth) reduces the bending stress by decreasing the bending moment produced at the root of the tooth. The short tooth also reduces the torsional stress concentration at the root due to the less stress flow into the tooth.

The compound root fillet having a large bottom radius and a relatively smaller corner radius minimizes tooth stress. The short tooth height increases the bending strength while lowering the torsional stress concentration. The present invention provides a tooth geometry that has a high capacity for carrying the turbine section generated torque while having a smaller diameter than presently available fan shaft couplings.

Having thus described the present invention, other modifications, alterations, or substitutions may now suggest themselves to those skilled in the art, all of which are within the spirit and scope of the present invention. It is therefore intended that the present invention be limited only by the scope of the attached claims below.

**Claims**

1.  A gas turbine engine comprising:
    a front mounted fan;
    a turbine section; and
    linkage means connecting said fan to said turbine section and for rotatably driving said fan,
        wherein said linkage means includes turbine shaft means extending forwardly from said turbine section to said fan;
        fan shaft means extending rearwardly from said fan toward said turbine section; and
        spline coupling means for coupling said fan shaft means and said turbine shaft means to each other, wherein said spline coupling means comprises an outer spline having internally directed teeth and an inner spline having externally directed teeth and wherein said spline teeth each have an involute profile with a thirty degree pressure angle and a compound curvature root fillet.

2. The gas turbine engine of claim 1 wherein said compound curvature root fillet includes a bottom radius $R_b$ and a corner radius $R_c$ extending between said bottom radius and said profile, wherein $R_b > R_c$ and wherein $R_b$ is between about 1.6/p and 1.1/p, where p equals the diametral pitch of said teeth.

3. The gas turbine engine of claim 2 wherein $R_c$ is between .6/p and .4/p.

4. The gas turbine engine of claim 2 wherein the whole depth of said teeth is less than about 1.0/p.

5. The gas turbine engine of claim 1 wherein said compound curvature root fillet includes a bottom radius $R_b$ and a corner radius $R_c$ extending between said bottom radius and said profile, wherein $R_b > R_c$ and wherein $R_c$ is less than about .6/p, where p equals the diametral pitch of said teeth.

6. The gas turbine engine of claim 5 wherein the whole depth of said teeth is less than about 1.0/p.

7. The gas, turbine engine of claim 6 wherein said whole depth is defined by a tooth addendum and tooth dedendum and wherein said addendum has a length in the range of about .31/p to about .35/p.

8. The gas turbine engine of claim 7 wherein said dedendum has a length in the range of about .63/p to about .65/p.

*Fig 1*

*Fig 3*

Fig 2

EP 0 503 964 A1

**European Patent Office**

**EUROPEAN SEARCH REPORT**

Application Number

EP 92 30 2186

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | US-A-4 744 214 (W.G.MONSARRAT)<br>* column 1, line 49 - line 55 *<br>* figures * | 1-8 | F01D5/02 |
| Y | US-A-4 643 654 (L.RINDER)<br>* column 9, line 36 - line 40; figure 2 * | 1-8 | |
| A | MACHINE DESIGN<br>vol. 58, no. 23, 9 October 1986, OHIO,USA<br>page 76;<br>*Text under the heading 'Quality'* | 1-10 | |
| A | US-A-3 982 445 (W.S.ROUVEROL)<br>* column 2, line 6 - line 22; figure 4 * | 1-8 | |
| A | DE-C-3 635 916 (J.M.VOITH)<br>* claims *<br>* column 3, line 15 - line 22 *<br>* column 4, line 34 - line 35; figures * | 1-8 | |
| A | GB-A-630 465 (FAIRFIELD MANUFACTURING)<br>* page 2, line 58 - line 76; figure * | 1-8 | TECHNICAL FIELDS SEARCHED (Int. Cl.5) |
| A | EP-A-0 292 559 (KYOIKU HAGURAMA KOGYO) | | F01D<br>F16D<br>F16C<br>F16H |
| A | US-A-3 174 302 (A.W.POMPER) | | |
| A | US-E-20 270 (J.L.MATTHEWS) | | |

The present search report has been drawn up for all claims

| Place of search | Date of completion of the search | Examiner |
|---|---|---|
| THE HAGUE | 18 JUNE 1992 | CRIADO Y JIMENEZ, F. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

8